# FASCICULE DE BREVET EUROPEEN

(11) **EP 2 556 913 B1**
(45) Date de publication et mention de la délivrance du brevet: **02.05.2018**
(21) Numéro de dépôt: 12175712.4
(22) Date de dépôt: 10.07.2012
(51) Int. Cl.: B23K 9/29, B23K 9/32

(54) **Torche de soudage à l'arc à aspiration modulable des fumées**
Lichtbogenschweißbrenner mit modulierbarer Rauchabsaugung
Arc-welding torch with adjustable fume suction

(30) Priorité: 10.08.2011 FR 1157269
(43) Date de publication de la demande: 13.02.2013
(73) Titulaire: AIR LIQUIDE WELDING FRANCE, 75007 Paris (FR)
(72) Inventeur: Maocec, Christian, 60700 PONT SAINTE MAXENCE (FR)
(74) Mandataire: Grosse Schumacher Knauer von Hirschhausen

(56) Documents cités:
- WO-A1-02/30609
- DE-C1- 4 114 084
- FR-A1- 2 439 056

## Description

L'invention porte sur une torche manuelle de soudage à l'arc électrique, de préférence de type MIG/MAG, avec aspiration modulable des fumées émises pendant une opération de soudage.

En soudage MIG/MAG manuel, un soudeur tient habituellement à la main une torche de soudage manuelle qui est utilisée pour réaliser le ou les joints de soudure désirés.

Afin de se conformer à certaines réglementations ou normes qui stipulent que, s'il n'est pas possible de supprimer les émissions sous forme de gaz, vapeurs, aérosols de particules solides ou liquides, de substances insalubres, gênantes ou dangereuses pour la santé des travailleurs, elles doivent être captées au fur et à mesure de leur production, au plus près de leur source d'émission et aussi efficacement que possible, certaines torches manuelles sont équipées d'un conduit ou analogue d'évacuation des fumées qui est connecté fluidiquement à une centrale d'aspiration de sorte de permettre une aspiration des fumées de soudage grâce à un capteur de fumées, assemblé à une portion coudée de la torche de soudage, qui fait souvent, par ailleurs office de porte-buse.

Ces fumées sont aspirées par le capteur portant la buse, sont canalisées ensuite dans la portion coudée, le manche de torche, puis dans une gaine, et enfin dans un connecteur spécialement étudié pour le raccordement avec un générateur de soudage et une centrale d'aspiration.

Par ailleurs, il est connu que l'efficacité d'aspiration dépend de plusieurs paramètres qui sont le profil de buse et de la portion coudée, les pertes de charge du circuit d'aspiration de la torche et les caractéristiques du système d'aspiration, principalement le débit et la dépression dudit système.

Or, cette efficacité d'aspiration n'est plus optimale quand le soudeur doit intervenir dans une zone de soudage exigüe, tel un joint profond ou en angle fermé.

En effet, dans de tels cas, la vitesse d'aspiration du gaz entraine aussi une partie du gaz de protection distribué par la buse, ce qui conduit à une dégradation la qualité de la soudure.

Pour palier ce problème, il convient d'ajuster le débit d'aspiration, en particulier de le réduire pour diminuer ou au moins limiter fortement la quantité de gaz de protection inopinément aspirée en même temps que les fumées de soudage.

Pour ce faire, l'opérateur peut intervenir sur le réglage mécanique de sa torche pour réduire la dépression au niveau du manche de la torche.

Actuellement, le réglage du débit d'aspiration au niveau du capteur se fait en aménageant un orifice de fuite dans la partie amont du manche de torche, c'est-à-dire dans la partie supérieure de ce manche, ayant pour effet de réduire la dépression à l'entrée du coude d'aspiration, et donc du débit qui en résulte.

Le diamètre d'ouverture ou de passage d'air au travers de l'orifice de fuite est contrôlé par déplacement d'un curseur ou d'un volet d'obturation porté par le manche lui-même.

Cette solution n'est cependant pas compatible avec les torches de dernière génération qui incluent une commande à distance électrique dans le manche de la torche servant, soit à faire varier à distance les paramètres de soudage en commandant le générateur de courant de soudage, soit à commander à distance le fonctionnement de la centrale d'aspiration.

En effet, pour des raisons ergonomiques et de facilité de manipulation par le soudeur, ladite commande à distance électrique doit être aussi aménagée dans la partie supérieure du manche de torche et on se heurte alors immédiatement à un problème d'insuffisance de place, c'est-à-dire d'encombrement.

D'autres alternatives ont été proposées mais aucune n'est satisfaisante, que ce soit en termes de maniabilité, d'encombrement ou de précision de réglage de l'ouverture de l'orifice de fuite.

Ainsi, le document WO-A-02/30609 divulgue une torche manuelle de soudage MIG/MAG comprenant un orifice de fuite à l'entrée du coude d'aspiration, l'ouverture de l'orifice étant contrôlée par déplacement en translation d'un volet d'obturation. Outre l'encombrement important d'un tel système, son positionnement est gênant et sa manipulation n'est pas aisée, en particulier pour un soudeur muni de gants de protection.

Quant au document DE-C-4114084, il décrit une torche manuelle de soudage comprenant une pluralité d'orifices de fuite et une bague rotative agencée dans une gorge aménagée sur la portion tubulaire rectiligne, i e. non coudée, de la torche, ladite bague comprenant une pluralité d'orifices pouvant être alignés ou non avec les orifices de fuite. Le contrôle de l'alignement de ces différentes orifices n'est pas aisé, ce qui n'autorise pas un ajustement fin et progressif du débit d'aspiration par l'opérateur.

Il s'avère en outre que les solutions existantes conduisent à libérer un espace trop important pour obtenir une augmentation importante de la section de fuite, ce qui ne répond pas aux normes de protection de l'opérateur vis-à-vis des chocs électriques qui imposent que les orifices de fuite des torches interdisent le passage d'objets métalliques de dimensions trop importantes.

De là, le problème qui se pose est de proposer une torche manuelle de soudage à l'arc électrique améliorée comprenant un manche équipé d'une commande à distance électrique, soit solidaire du manche, soit débrochable, et par ailleurs un circuit d'aspiration des fumées à débit de fuite contrôlé par des moyens de réglage du débit d'aspiration, laquelle torche ne pose pas le problème d'encombrement susmentionné.

De plus, la torche proposée doit permettre un réglage aisé et précis dudit du débit d'aspiration par l'opérateur, c'est-à-dire le soudeur équipé de gants de protection.

La solution de l'invention est une torche manuelle de soudage à l'arc électrique selon la revendication 1. Selon le cas, l'invention peut comprendre l'une ou plusieurs des caractéristiques techniques suivantes :
- l'orifice de fuite est agencé sur la portion tubulaire coudée ou entre la portion tubulaire coudée et le corps de torche.
- l'organe de réglage de fuite est mobile en rotation dans au moins une position intermédiaire située entre la position de fermeture dans laquelle l'orifice de fuite et la position d'ouverture, dans laquelle l'orifice de fuite est uniquement partiellement libéré de sorte qu'un flux gazeux partiel puisse traverser ledit l'orifice de fuite, c'est-à-dire un flux réduit par rapport au flux maximal ou nominal traversant l'orifice lorsqu'il est en position d'ouverture.
- la course angulaire de l'organe de réglage de fuite est de l'ordre de 30° à 60°.
- la course de déplacement en translation de l'organe de réglage de fuite est de l'ordre de quelques millimètres, de préférence inférieure à 2.5 mm.
- l'organe de réglage de fuite est agencé autour de la portion tubulaire coudée au niveau du site de fixation de ladite portion tubulaire coudée au corps de torche.
- l'organe de réglage de fuite est une bague rotative.
- l'organe de réglage de fuite est une bague rotative comprenant un ou plusieurs joints d'étanchéité sur sa surface interne et/ou sur sa surface externe.
- des joints toriques sont positionnés dans des gorges aménagées dans l'organe de réglage de fuite.
- la portion tubulaire coudée comprend un premier conduit interne venant se raccorder à un deuxième conduit interne du corps de torche, lesdites premier et deuxième conduits servant à guider le conduit d'usure (ou liner) servant lui-même de guide pour le fil fusible de soudage ; et véhiculer le gaz de protection jusque dans le diffuseur de gaz et la buse de protection de l'arc électrique.
- l'extrémité aval de la portion tubulaire coudée est reliée à un capteur de fumée, qui peut être éventuellement coiffé d'une jupe externe formant manchon autour de celui-ci de sorte de renforcer l'aspiration dans le cas de très fortes émissions de fumées, comme par exemple lors d'un soudage MAG avec fil fourré fusible.
- la torche est de type MIG/MAG.
- le fil fusible est un fil plein ou un fil fourré.
- le manche de la torche est conformé et dimensionné pour pouvoir être tenu en main par un opérateur de soudage, en particulier un soudeur muni de gants de protection.
- la gâchette de commande électrique sert à déclencher le cycle de soudage organisé ou programmé dans le générateur de soudage, en particulier, la puissance électrique (intensité, tension), le contrôle de la vitesse du fil fusible de soudage, et le contrôle du gaz de protection de l'arc électrique.
- l'organe de commande à distance permet de régler à distance un ou plusieurs paramètres de soudage, notamment tension, intensité, vitesse de fil, N° de programme...
- la portion tubulaire coudée comprend un premier conduit interne, agencé dans son second passage interne, venant se raccorder à un deuxième conduit interne du corps de torche, lesdites premier et deuxième conduits servant à véhiculer au moins un fil fusible de soudage, de préférence un fil de soudage et du gaz de protection.
- le premier conduit interne traverse sensiblement axialement la portion tubulaire coudée et est également coudé, c'est-à-dire que ceux-ci sont approximativement concentriques et coaxiaux (bien que leurs axes soient courbes).
- le premier conduit interne comprenant une extrémité amont et une extrémité aval faisant saillie au-delà des extrémités amont et aval de la portion tubulaire coudée.
- le capteur de fumées comprend plusieurs ouvertures, telles des ouïes.
- le capteur de fumées à une forme générale tubulaire.
- le capteur de fumées à une forme générale tubulaire comprend plusieurs ouvertures, telles des ouïes, réparties autour de sa périphérie.
- le capteur est équipé d'une jupe formant manchon autour d'au moins une partie dudit capteur et desdites ouvertures de manière à améliorer l'efficacité d'aspiration des fumées.

L'invention concerne aussi une installation de soudage comprenant un générateur de courant de soudage, un dévidoir de fil portant une bobine de fil de soudage, une source de gaz et une torche de soudage à l'arc selon l'invention. Bien entendu, la torche de soudage à l'arc est reliée de façon classique au générateur, au dévidoir et à la source de gaz via un faisceau de câbles électriques et de canalisations.

Par ailleurs, l'invention porte aussi sur un procédé de soudage à l'arc électrique, en particulier de soudage MIG/MAG, mettant en oeuvre une torche ou une installation de soudage selon l'invention.

L'invention va maintenant être décrite plus en détail en référence aux figures annexées parmi lesquelles :
- la Figure 1 représente un mode de réalisation d'une torche de soudage selon l'invention,
- la Figure 2 illustre un mode de réalisation de la bague rotative de la torche de la Figure 1,
- les Figures 3 et 4 illustrent la manière dont la bague rotative coopère avec l'orifice de fuite de la torche de la Figure 1,
- la Figure 5 est une vue en coupe longitudinale de la partie avant de la torche de soudage selon l'invention, et
- la Figure 6 est une vue de la partie avant de la torche de soudage de la Figure 1.

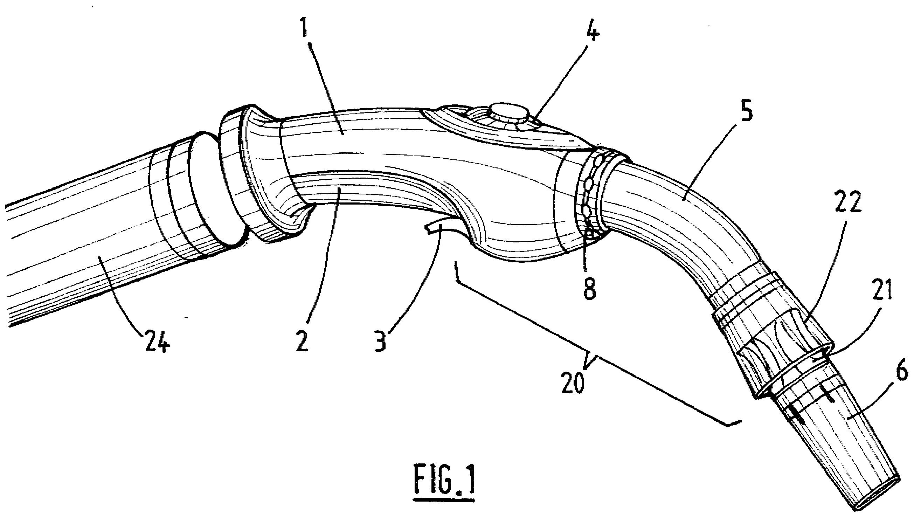

La Figure 1 représente un mode de réalisation d'une torche manuelle de soudage à l'arc électrique selon la présente invention, par exemple une torche de soudage MIG (pour *Metal Inert Gas*), c'est-à-dire de soudage avec apport de métal sous forme d'un fil fusible 11 et mise en place d'une protection gazeuse inerte à base d'un ou plusieurs gaz, tel l'argon, l'hélium et leurs mélanges, ou MAG (pour *Metal Active Gas*) avec une protection gazeuse active à base de CO₂ ou d'un mélange d'argon avec du CO₂, les gaz étant en proportions variables selon les métaux à souder.

Cette torche MIG/MAG comprend un corps de torche 1 muni d'un manche ou poignée de manipulation 2 que l'opérateur tient à la main pendant l'opération de soudage proprement dite, ainsi que d'une gâchette de commande électrique 3 et d'un organe de commande à distance 4.

La gâchette de commande électrique 3 est agencée sur un circuit électrique reliant la torche à un générateur de courant de soudage, et son activation par l'opérateur permet d'autoriser le passage du courant électrique servant à fondre le fil de soudage fusible 11 au niveau de la buse 6 équipant la torche, comme expliqué ci-après.

Par ailleurs, l'organe de commande à distance 4 permet à l'opérateur de commander à distance des équipements de soudage, en particulier le générateur de courant de soudage, voire le dévidoir de fil, de manière à pouvoir régler un ou des paramètres de soudage sans avoir à se déplacer jusqu'à ces équipements, par exemple des paramètres du type tension, intensité, vitesse de fil...

La torche comprend également un capteur de fumées 22 relié mécaniquement par son extrémité amont 22a à l'extrémité aval 5b d'une portion tubulaire coudée 5, qui vient se raccorder elle même se fixer, par son extrémité amont 5a, au corps de torche 1.

Le capteur de fumées 22 comprend un premier passage interne 13 en communication fluidique, via le second passage interne 26 de la portion tubulaire coudée 5, avec un conduit d'évacuation des fumées 9 traversant le corps de torche 1 de manière à pouvoir opérer une aspiration de tout ou partie des fumées et gaz émis pendant l'opération de soudage, notamment du fait de la fusion du fil fusible 11 par l'arc électrique.

Les fumées émises lors du soudage sont en fait aspirées et pénètrent dans le premier passage interne 13 puis le second passage interne 26, via une ou plusieurs ouvertures 25, telles des ouïes, aménagées au travers de la paroi du capteur 22 de fumées. Ces ouvertures 25 permettent en fait de faire communiquer l'intérieur du capteur 22 de fumées, c'est-à-dire le premier passage interne 13, avec l'atmosphère ambiante qui se charge de fumées lors du soudage.

Comme illustré en Figure 1, l'extrémité aval de la portion tubulaire 5 coudée reliée au capteur 22 de fumée, peut être éventuellement coiffée d'une jupe externe formant manchon autour de celui-ci et des ouïes 25 de sorte de renforcer l'aspiration en cas de très fortes émissions de fumées.

L'évacuation des fumées se fait ensuite par le canal interne du corps de torche puis par la gaine 24, relié à une centrale d'aspiration, par exemple un dispositif à turbine motorisée ou analogue.

Par ailleurs, le capteur de fumées 22 porte, à son extrémité aval 22b, une buse de soudage 6 par laquelle sort le fil 11 fusible et qui permet par ailleurs de distribuer le gaz de protection dans la zone de soudage de manière à la protéger de toute contamination par des impuretés atmosphériques, tel l'oxygène, l'azote ou la vapeur d'eau par exemple.

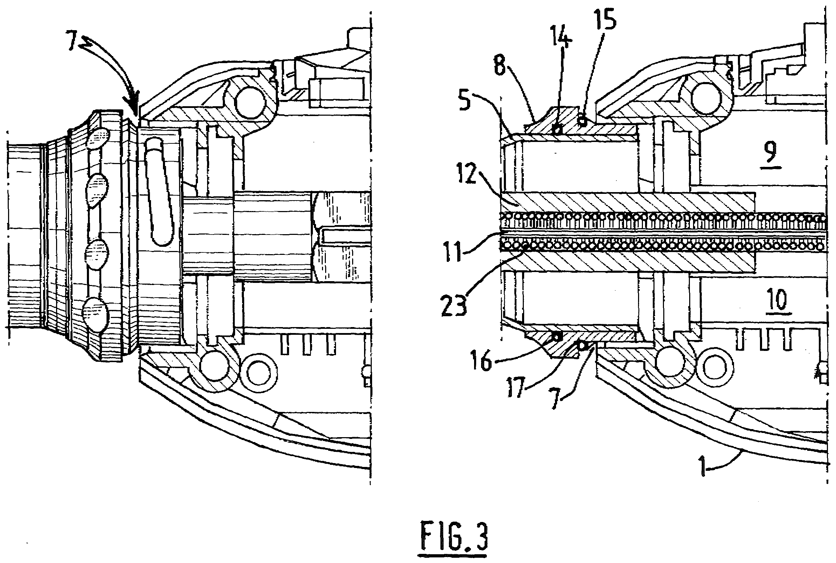

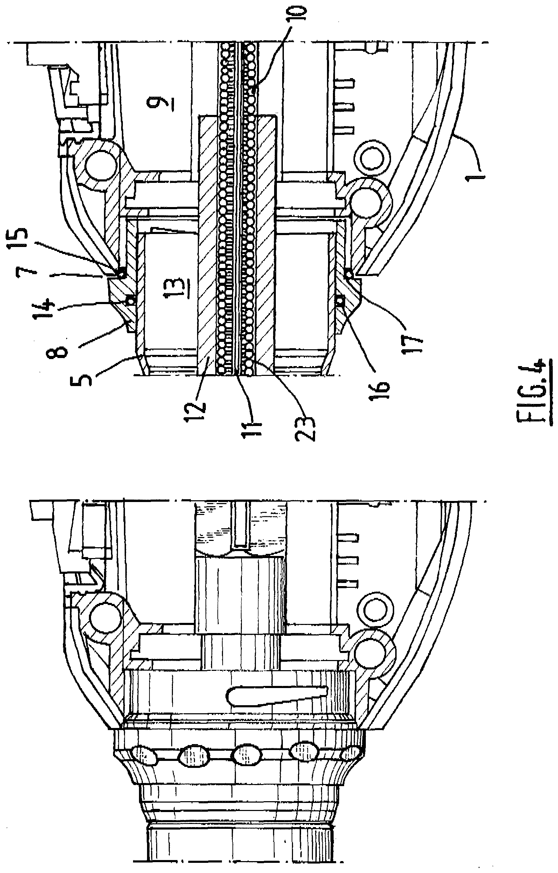

Pour ce faire, la portion tubulaire 5 recouvre un premier conduit interne 12 (conduit de lance) venant se raccorder à un deuxième conduit interne 10 (raccord de lance) du corps de torche 1 qui servent à véhiculer le liner 23 et le fil fusible 11 et le gaz de protection jusque dans la buse 6, comme visible sur les Figures 3 et 4.

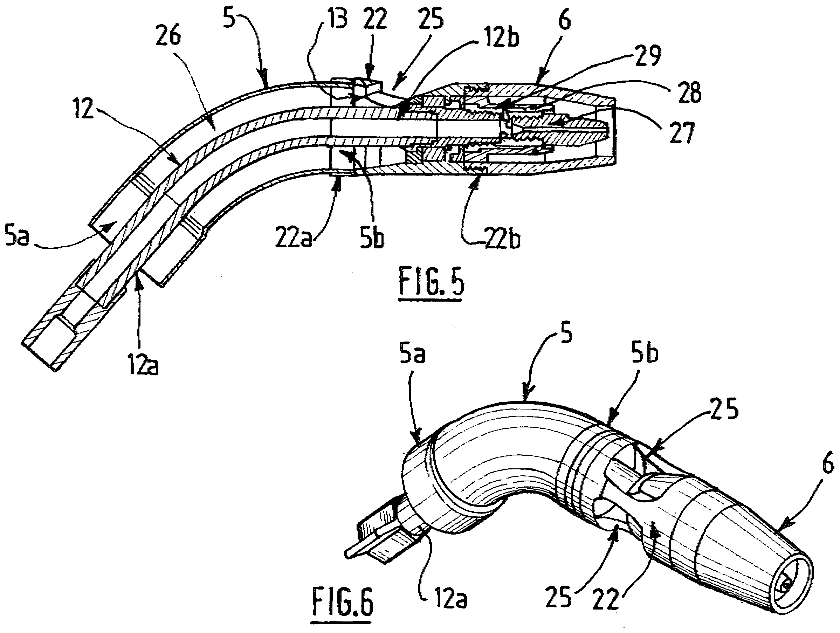

Les premier conduit interne 12 et deuxième conduit interne 10 servent également à acheminer le courant électrique jusqu'à un tube contact 27 maintenu dans la buse 6 par un support 28 de tube contact, comme illustré en Figure 5. Ces éléments sont maintenus isolés de la buse 6 par un diffuseur isolant 29.

Le fil fusible traverse en fait le tube contact 27 en étant ensuite progressivement fondu par l'arc électrique qui se crée à l'extrémité libre du fil fusible, lors du soudage.

La Figure 5 permet de voir que l'extrémité aval de la portion tubulaire 5 coudée est raccordée au capteur de fumées 22 sur lequel vient se fixer à la buse 6.

Par ailleurs, la Figure 6 montre la partie avant de torche de l'invention vue de côté et permet de bien visualiser la partie coudée 5, le capteur de fumées 22 avec ses ouïes 25 et la buse 6.

De façon classique, le fil fusible 11 provient d'un dévidoir de fil (non montré) et le gaz est issu d'une source de gaz (non montrée), telle une bouteille de gaz, qui sont en général reliés l'un et l'autre au générateur de courant de soudage.

Un dispositif d'aspiration (non montré), telle une turbine haute dépression, reliée au corps 1 de torche par une gaine d'aspiration 24, permet de réaliser une aspiration des fumées via le capteur 22, puis le passage interne 13 de la portion tubulaire 5 coudée vers un conduit d'évacuation 9 aménagé dans le corps 1 de la torche.

Afin de permettre de régler le débit d'aspiration des fumées aspirées par la portion tubulaire 5 coudée et qui y circule (en 13) en direction du conduit d'évacuation 9 du corps de torche 1, sont prévus, d'une part, un orifice de fuite 7 ménageant un passage entre l'atmosphère ambiante et l'intérieur du conduit d'évacuation des fumées 9, et donc forcément avec le volume intérieur 13 de la portion tubulaire 5 coudée, et, d'autre part, un organe de réglage de fuite 8 coopérant avec l'orifice de fuite 7 pour libérer ou, à l'inverse, obturer totalement ou partiellement ledit orifice de fuite 7 et ainsi autoriser ou, à l'inverse, interdire ou limiter tout passage de gaz au travers dudit orifice de fuite 7.

Selon la présente invention, l'orifice de fuite 7 et l'organe de réglage de fuite 8 sont agencés au niveau de la partie avant 20 de la torche située entre la gâchette 3 et la buse 6, comme illustré en Figure 1, en particulier au voisinage de la jonction entre la portion d'aspiration coudée 5 et le corps 1 portant le manche 2 de la torche.

Selon un mode de réalisation préféré selon l'invention, l'orifice de fuite 7 et l'organe de réglage de fuite 8 sont agencés à l'intersection corps 1 portant le manche 2 et de la portion d'aspiration tubulaire coudée 5.

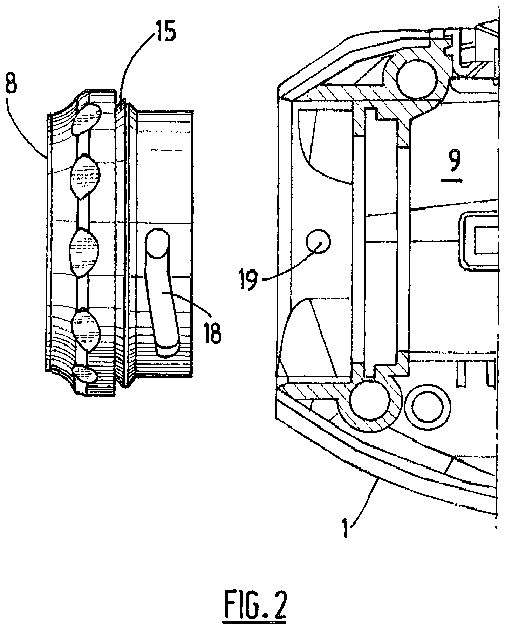

Plus précisément, et contrairement aux torches de l'art antérieur, l'organe de réglage de fuite 8, tel un volant ou bague, comme schématisé en Figure 2, est mobile en rotation autour de la portion d'aspiration tubulaire coudée 5 mais a une course limitée angulairement à moins de 120°, de préférence une course angulaire de 30° à 60°, de manière à permettre à l'opérateur d'ouvrir ou de fermer aisément l'orifice de fuite 7, de préférence un orifice calibré 7, localisé entre l'organe de réglage de fuite 8 rotatif et le corps 1 de la torche, comme illustré en Figure 3 et 4.

En fait, un tel agencement permet une manipulation ergonomique par l'opérateur de la torche et de ses différents organes de réglage, même s'il est muni de gants, c'est-à-dire facile et sans gêne sur l'opérateur, et par ailleurs permet de résoudre le problème d'encombrement malgré la présence de l'organe de commande à distance 4 située au niveau du manche 2 de la torche.

Comme schématisé en Figure 2, la limitation de course angulaire de l'organe de réglage de fuite 8 peut se faire par le biais d'un logement ou évidement 18 de forme allongée aménagé dans la paroi de l'organe de réglage de fuite 8, tel une bague rotative, lequel logement 18 coopère avec un picot 19 en saillie portée par le corps 1 de la torche, ledit picot 19 venant se loger dans ledit logement 18 en y étant retenu et guidé lors des rotations de l'organe de réglage de fuite 8. Bien entendu, une configuration inverse est possible, à savoir un picot 19 agencé sur l'organe de réglage de fuite 8 coopérant avec un logement 19 aménagé dans le corps 1 de la torche.

Une autre mode de réalisation de l'organe de réglage de fuite 8, qui est préféré, est un organe de réglage de fuite 8, tel un volant ou bague, de préférence une bague, comme schématisé en Figure 2, mobile en rotation et en translation autour de la portion d'aspiration tubulaire coudée 5 mais ayant une course limitée angulairement, c'est-à-dire inférieure à 120°, par exemple une course de 30° à 60°, qui entraine la bague en translation, de manière à permettre à l'opérateur d'ouvrir ou de fermer l'espace localisé 7 entre l'organe de réglage de fuite 8 rotatif et le corps 1 de la torche, comme illustré en Figure 3 et 4.

L'avantage de ce principe est de pouvoir augmenter fortement la section de fuite afin de réduire notablement le débit d'aspiration au niveau du capteur, sans engendrer un déplacement trop important de la bague en translation.

Ce principe offre aussi l'avantage de satisfaire à certaines exigences de sécurité, notamment celles prescrites par la norme internationale 60974-7 relative aux torches de soudage et à la protection contre les chocs électriques. En effet, l'espace 7 ouvert selon ce principe permet d'augmenter fortement la section de fuite, celle-ci étant avantageusement répartie autour de la portion tubulaire 5, tout en interdisant le passage d'objets métalliques de dimensions trop importantes, en particulier de tiges métalliques de diamètre supérieur ou égal à 2.5 mm.

Avantageusement, la course de déplacement en translation de l'organe de réglage de fuite 8 est typiquement de quelques millimètres, de préférence moins de 2.5 mm, de préférence inférieure à 2 mm, de préférence encore inférieure ou égale à 1.5 mm.

Outre le fait que le déplacement de l'organe de réglage de fuite soit aisé pour l'opérateur, ce principe permet également un contrôle fin et progressif de l'ouverture de l'espace 7, c'est-à-dire de la section de fuite et donc du débit d'aspiration.

Il offre aussi l'avantage de pouvoir positionner l'organe de réglage de fuite autour de la portion tubulaire coudée 5 et donc de réguler efficacement le débit d'aspiration.

Comme schématisé en Figure 2, la limitation de course angulaire de l'organe de réglage de fuite 8 peut se faire par le biais d'un logement ou évidement 18 de forme allongée et inclinée, aménagé dans la paroi de l'organe de réglage de fuite 8, tel une bague rotative, lequel logement 18 coopère avec un picot 19 en saillie portée par le corps 1 de la torche, ledit picot 19 venant se loger dans ledit logement 18 en y étant retenu et guidé lors des rotations de l'organe de réglage de fuite 8. La rotation de la bague, guidée d'une part par le système fente allongée inclinée-picot, et d'autre part par l'ajustement de la bague munie d'un joint d'étanchéité et de la portion d'aspiration tubulaire coudée 5, se déplace sur la portion d'aspiration tubulaire coudée, entre la « position fermée » (joint 15 plaqué contre le manche 2) et la « position ouverte » suite à déplacement de la bague de quelques millimètres pour libérer un espace ouvert circulaire entre ladite bague et le manche 2. L'avantage de ce principe est de pouvoir augmenter fortement la section de fuite, afin de réduire notablement le débit d'aspiration au niveau du capteur.

Ainsi, la Figure 3 schématise l'orifice de fuite 7 lorsqu'il communique fluidiquement avec l'atmosphère ambiante, donc lorsqu'il n'est pas obturé par l'organe de réglage de fuite 8 ; cette configuration est appelée « position ouverte »

A l'inverse, la Figure 4 schématise l'orifice de fuite 7 lorsqu'il ne communique pas fluidiquement avec l'atmosphère ambiante car son passage est totalement obturé par l'organe de réglage de fuite 8 ; cette configuration est appelée « position fermée ».

Il est bien entendu que l'orifice de fuite 7 peut également occuper des positions intermédiaires dans lesquelles l'orifice de fuite 7 est uniquement partiellement obturé de manière à pouvoir réguler/contrôler la quantité de gaz le traversant, donc régler aussi le débit d'aspiration des fumées.

Grâce à cet agencement, on peut aisément et efficacement moduler la dépression en amont du corps 1 de torche, soit à l'intersection entre partie coudée 5 et corps de torche 1, voire sur la partie coudée 5 elle-même dans l'hypothèse où l'orifice de fuite 7 serait percé au travers de la paroi de la portion tubulaire coudée 5 fixée au corps de torche 1.

Comme visible sur les Figures 2 à 4, l'organe de réglage de fuite 8 est, dans le mode de réalisation présenté, une bague rotative comprenant un ou plusieurs joints d'étanchéité 14, 15 sur sa surface interne et/ou sur sa surface externe. De préférence, des joints toriques 14, 15 sont positionnés dans des gorges 16, 17 aménagées périphériquement, c'est-à-dire annulairement, dans ses parois internes et externes.

L'un des joints, 14, permet d'assurer une étanchéité fluidique, en particulier gazeuse, entre la paroi interne de l'organe de réglage de fuite 8 et la paroi externe tubulaire de la portion tubulaire coudée 5, alors que l'autre joint 15 permet d'assurer une étanchéité fluidique, en particulier gazeuse, entre la paroi externe de l'organe de réglage de fuite 8 et la surface externe du corps de torche 1.

L'organe de réglage de fuite 8, par exemple une bague rotative, est en matériau plastique ou métallique.

Selon le modèle de torche, le refroidissement est :
- soit du type naturel ou à l'air, c'est-à-dire que les calories dégagées par l'effet Joule des connexions et des câbles de puissance et des calories dégagés par l'arc électrique, sont évacués par convexion, mais, suivant les cas, le flux d'aspiration qui circule dans le coude et le manche de la torche peut également avoir une action de refroidissement de l'outil tenu dans la main de l'opérateur.
- soit du type refroidi à l'eau. Dans ce cas, un groupe de refroidissement d'eau (pompe + échangeur) alimente un circuit spécifique de la torche pour refroidir le câble de puissance, la lance de torche, et les pièces d'usure.

La torche de l'invention est particulièrement adaptée à tout procédé de soudage manuel à l'arc électrique, en particulier de soudage MIG/MAG.

## Revendications

1. Torche manuelle de soudage à l'arc électrique comprenant :
- un corps de torche (1) comprenant un manche de manipulation (2), une gâchette de commande électrique (3), un organe de commande à distance (4) et un conduit d'évacuation des fumées (9),
- un capteur de fumées (22) comprenant un premier passage interne (13) et une ou plusieurs ouvertures (25) mettant ledit premier passage interne (13) en communication fluidique avec l'extérieur de la torche,
- une portion tubulaire coudée (5) comprenant un second passage interne (26) et étant fixée audit corps de torche (1) et raccordée par ailleurs fluidiquement au capteur (22) de fumées,
- le second passage interne (26) de la portion tubulaire coudée (5) et le passage interne (13) du capteur (22) étant en communication fluidique avec le conduit d'évacuation des fumées (9) traversant le corps de torche (1),
- une buse de soudage (6) fixée à ladite portion tubulaire (5) coudée ou au capteur de fumées (22),
- un orifice de fuite (7) ménageant un passage entre l'atmosphère ambiante et l'intérieur du conduit d'évacuation des fumées (9), et
- un organe de réglage de fuite (8) coopérant avec l'orifice de fuite (7) pour libérer ou, à l'inverse, obturer totalement ou partiellement ledit orifice de fuite (7),
l'orifice de fuite (7) et l'organe de réglage de fuite (8) étant agencés au niveau de la partie avant (20) de la torche située entre la gâchette (3) et la buse (6),
**caractérisée en ce que** l'organe de réglage de fuite (8) est mobile en rotation autour de et en translation sur la portion tubulaire (5) coudée entre au moins :
- une position de fermeture dans laquelle l'orifice de fuite (7) est totalement obturé par l'organe de réglage de fuite (8) de sorte qu'aucun flux gazeux ne puisse traverser ledit orifice de fuite (7) et
- une position d'ouverture dans laquelle l'orifice de fuite (7) est totalement libéré de sorte qu'un flux gazeux total puisse traverser ledit l'orifice de fuite (7),
et où la course angulaire de l'organe de réglage de fuite (8) est inférieure à 120° et entraine ledit organe de réglage de fuite (8) en translation de manière à permettre à l'opérateur de libérer ou d'obturer l'orifice de fuite (7).

2. Torche selon la revendication précédente, **caractérisée en ce que** l'orifice de fuite (7) est agencé sur la portion tubulaire (5) coudée ou entre la portion tubulaire (5) coudée et le corps de torche (1).

3. Torche selon l'une des revendications précédentes, **caractérisée en ce que** l'organe de réglage de fuite (8) est mobile en rotation dans au moins une position intermédiaire située entre la position de fermeture dans laquelle l'orifice de fuite (7) et la position d'ouverture, dans laquelle l'orifice de fuite (7) est uniquement partiellement libéré de sorte qu'un flux gazeux partiel puisse traverser ledit l'orifice de fuite (7).

4. Torche selon l'une des revendications précédentes, **caractérisée en ce que** la course angulaire de l'organe de réglage de fuite (8) est de l'ordre de 30° à 60°.

5. Torche selon l'une des revendications précédentes, **caractérisée en ce que** la course de déplacement en translation de l'organe de réglage de fuite (8) est de l'ordre de quelques millimètres, de préférence inférieure à 2.5 mm.

6. Torche selon l'une des revendications précédentes, **caractérisée en ce que** l'organe de réglage de fuite (8) est agencé autour de la portion tubulaire (5) coudée au niveau du site de fixation de ladite portion tubulaire (5) coudée au corps de torche (1).

7. Torche selon l'une des revendications précédentes, **caractérisée en ce que** l'organe de réglage de fuite (8) est une bague rotative.

8. Torche selon l'une des revendications précédentes, **caractérisée en ce que** l'organe de réglage de fuite (8) est une bague rotative comprenant un ou plusieurs joints d'étanchéité (14, 15) sur sa surface interne et/ou sur sa surface externe, de préférence des joints toriques (14, 15) positionnés dans des gorges (16, 17).

9. Torche selon l'une des revendications précédentes, **caractérisée en ce que** la portion tubulaire (5) coudée comprend, agencé dans son second passage interne (26), un premier conduit interne (12) venant se raccorder à un deuxième conduit interne (10) du corps de torche (1), lesdites premier et deuxième conduits (10, 12) servant à véhiculer au moins un fil fusible (11) de soudage, de préférence un fil de soudage et du gaz de protection.

10. Torche selon l'une des revendications précédentes, **caractérisée en ce que** le premier conduit interne (12) traverse sensiblement axialement la portion tubulaire (5) coudée et est également coudé.

11. Torche selon l'une des revendications précédentes, **caractérisée en ce que** le premier conduit interne (12) comprenant une extrémité amont (12a) et une extrémité aval (12b) faisant saillie au-delà des extrémités amont et aval (5a, 5b) de la portion tubulaire coudée (5).

12. Installation de soudage comprenant un générateur de courant de soudage, MIG/MAG un dévidoir de fil portant une bobine de fil, une source de gaz, et une torche de soudage à l'arc selon l'une des revendications précédentes.

13. Procédé de soudage manuel à l'arc électrique, en particulier de soudage MIG/MAG, mettant en oeuvre une torche selon l'une des revendications 1 à 11 tenue à la main par un opérateur et/ou une installation de soudage selon la revendication 12.

## Patentansprüche

1. Manueller Lichtbogenschweißbrenner, umfassend:
- einen Brennerkörper (1), der einen Handhabungsgriff (2), einen elektrischen Steuerauslöser (3), ein Fernbedienungselement (4) und eine Rauchgasabzugsleitung (9) aufweist,
- einen Rauchsensor (22), der einen ersten inneren Durchgang (13) und eine oder mehrere Öffnungen (25) aufweist, die den ersten inneren Durchgang (13) in Fluidverbindung mit dem Äußeren des Schweißbrenners setzen,
- einen gebogenen röhrenförmigen Abschnitt (5), der einen zweiten inneren Durchgang (26) aufweist und an dem Brennerkörper (1) befestigt ist und darüber hinaus mit dem Rauchsensor (22) in Fluidverbindung steht,
- wobei der zweite innere Durchgang (26) des gebogenen rohrförmigen Abschnitts (5) und der innere Durchgang (13) des Sensors (22) in Fluidverbindung mit der Rauchgasabzugsleitung (9) steht, die den Brennerkörper (1) durchquert,
- eine Schweißdüse (6), die an dem gebogenen rohrförmigen Abschnitt (5) oder an dem Rauchsensor (22) befestigt ist,
- eine Leckageöffnung (7), die einen Durchgang zwischen der Umgebungsatmosphäre und dem Inneren der Rauchgasabzugsleitung (9) bildet, und
- ein Organ zur Leckageeinstellung (8), das mit der Leckageöffnung (7) zusammenwirkt, um die Leckageöffnung (7) freizugeben oder umgekehrt vollständig oder teilweise zu schließen,
wobei die Lecköffnung (7) und das Organ zur Leckageeinstellung (8) am vorderen Teil (20) des Schweißbrenners angeordnet sind, der sich zwischen dem Auslöser (3) und der Düse (6) befindet,
**dadurch gekennzeichnet, dass** das Organ zur Leckageeinstellung (8) drehbeweglich um und verschiebbar auf dem gebogenen rohrförmigen Abschnitt (5) angeordnet ist mindestens zwischen:
- einer Schließposition, in der die Leckageöffnung (7) von dem Organ zur Leckageeinstellung (8) derart vollständig verschlossenen ist, dass kein Gasstrom die Leckageöffnung (7) durchqueren kann und
- einer Öffnungsposition, in der die Leckageöffnung (7) derart vollständig freigegeben ist, dass der gesamte Gasstrom die Leckageöffnung (7) durchqueren kann,
und wobei der Schwenkwinkel des Organs zur Leckageeinstellung (8) kleiner als 120° ist und das Organ zur Leckageeinstellung (8) derart in translatorische Bewegung versetzt, um der Bedienperson zu ermöglichen, die Leckageöffnung (7) freizugeben oder zu schließen.

2. Schweißbrenner nach dem vorhergehenden Anspruch, **dadurch gekennzeichnet, dass** die Leckageöffnung (7) auf dem gebogenen rohrförmigen Abschnitt (5) oder zwischen dem gebogenen rohrförmigen Abschnitt (5) und dem Brennerkörper (1) ausgebildet ist.

3. Schweißbrenner nach einem der vorhergehenden Ansprüche, **dadurch gekennzeichnet, dass** das Organ zur Leckageeinstellung (8) in mindestens einer Zwischenposition drehbeweglich ist, die sich zwischen der Schließposition, in der die Leckageöffnung (7), und der Öffnungsposition befindet, in der die Leckageöffnung (7) nur teilweise derart freigegeben ist, dass ein teilweiser Gasstrom die Leckageöffnung (7) durchqueren kann.

4. Schweißbrenner nach einem der vorhergehenden Ansprüche, **dadurch gekennzeichnet, dass** der Schwenkwinkel des Organs zur Leckageeinstellung (8) etwa 30° bis 60° beträgt.

5. Schweißbrenner nach einem der vorhergehenden Ansprüche, **dadurch gekennzeichnet, dass** der translatorische Verschiebungsweg des Organs zur Leckageeinstellung (8) etwa einige Millimeter, vorzugsweise weniger als 2,5 mm, beträgt.

6. Schweißbrenner nach einem der vorhergehenden Ansprüche, **dadurch gekennzeichnet, dass** das Organ zur Leckageeinstellung (8) um den gebogenen rohrförmigen Abschnitt (5) an der Befestigungsstelle des gebogenen rohrförmigen Abschnitts (5) an dem Brennerkörper (1) angeordnet ist.

7. Schweißbrenner nach einem der vorhergehenden Ansprüche, **dadurch gekennzeichnet, dass** das Organ zur Leckageeinstellung (8) ein drehbarer Ring ist.

8. Schweißbrenner nach einem der vorhergehenden Ansprüche, **dadurch gekennzeichnet, dass** das Organ zur Leckageeinstellung (8) ein drehbarer Ring ist, der eine oder mehrere Dichtungen (14, 15) auf seiner Innen- und/oder Außenfläche, vorzugsweise O-Ring-Dichtungen (14, 15), aufweist, die in Kehlen (16, 17) angeordnet sind.

9. Schweißbrenner nach einem der vorhergehenden Ansprüche, **dadurch gekennzeichnet, dass** der gebogene rohrförmige Abschnitt (5), in seinem zweiten inneren Durchgang (26) angeordnet, eine erste innere Leitung (12) aufweist, die mit einer zweiten inneren Leitung (10) des Brennerkörpers (1) verbunden wird, wobei die erste und zweite Leitung (10, 12) dazu dienen, einen schmelzbaren Schweißdraht (11), vorzugsweise einen Schweißdraht und Schutzgas zu befördern.

10. Schweißbrenner nach einem der vorhergehenden Ansprüche, **dadurch gekennzeichnet, dass** die erste innere Leitung (12) den gebogenen rohrförmigen Abschnitt (5) im Wesentlichen axial durchquert und auch gebogen ist.

11. Schweißbrenner nach einem der vorhergehenden Ansprüche, **dadurch gekennzeichnet, dass** die erste innere Leitung (12) ein vorgelagertes Ende (12a) und ein nachgelagertes Ende (12b) aufweist, die über das vorgelagerte und nachgelagerte Ende (5a, 5b) des gebogenen rohrförmigen Abschnitts (5) hinausragen.

12. Schweißanlage, umfassend einen MIG/MAG-Schweißstromgenerator, einen Drahtabroller, der eine Drahtrolle trägt, eine Gasquelle und einen Schweißbrenner nach einem der vorhergehenden Ansprüche.

13. Manuelles Lichtbogen-Schweißverfahren, insbesondere MIG/MAG-Schweißverfahren, das einen Schweißbrenner nach einem der Ansprüche 1 bis 11, der von einer Bedienperson in der Hand gehalten wird, und/oder eine Schweißanlage nach Anspruch 12 einsetzt.

## Claims

1. A manual electric arc welding torch including:
- a torch body (1) including a manipulation handle (2), an electrical control trigger (3), a remote control member (4) and a fume evacuation duct (9),
- a fume sensor (22) including a first internal passage (13) and one or more openings (25) putting said first internal passage (13) in fluidic communication with the exterior of the torch,
- a bent tubular portion (5) including a second internal passage (26) and being fixed to said torch body (1) and furthermore connected fluidically to the fume sensor (22),
- the second internal passage (26) of the bent tubular portion (5) and the internal passage (13) of the sensor (22) being in fluidic communication with the fume evacuation duct (9) passing through the torch body (1),
- a welding nozzle (6) fixed to said bent tubular portion (5) or to the fume sensor (22),
- an escape orifice (7) providing a passage between the ambient atmosphere and the interior of the fume evacuation duct (9), and
- an escape regulating member (8) cooperating with the escape orifice (7) to free or, conversely, to close up totally or partially said escape orifice (7),
the escape orifice (7) and the escape regulating member (8) being arranged at the level of the front part (20) of the torch situated between the trigger (3) and the nozzle (6),
**characterized in that** the escape regulating member (8) is movable in rotation about and in translation over the bent tubular portion (5) between at least:
- a closed position, in which the escape orifice (7) is totally closed up by the escape regulating member (8) such that no gaseous flow can pass through said escape orifice (7) and
- an open position, in which the escape orifice (7) is totally freed such that that a total gaseous flow can pass through said escape orifice (7),
and where the angular course of the escape regulating member (8) is less than 120° and entrains said escape regulating member (8) in translation, so as to permit the operator to free or close up the escape orifice (7).

2. The torch according to the - preceding claim, **characterized in that** the escape orifice (7) is arranged on the bent tubular portion (5) or between the bent tubular portion (5) and the torch body (1).

3. The torch according to one of the preceding claims, **characterized in that** the escape regulating member (8) is movable in rotation in at least one intermediate position situated between the closed position, in which the escape orifice (7) and the open position, in which the escape orifice (7) is only partially freed such that a partial gaseous flow can pass through said escape orifice (7).

4. The torch according to one of the preceding claims, **characterized in that** the angular course of the escape regulating member (8) is in the order of 30° to 60°.

5. The torch according to one of the preceding claims, **characterized in that** the course of displacement in translation of the escape regulating member (8) is in the order of a few millimetres, preferably less than 2.5 mm.

6. The torch according to one of the preceding claims, **characterized in that** the escape regulating member (8) is arranged around the bent tubular portion (5) at the level of the attachment site of said bent tubular portion (5) to the torch body (1).

7. The torch according to one of the preceding claims, **characterized in that** the escape regulating member (8) is a rotary ring.

8. The torch according to one of the preceding claims, **characterized in that** the escape regulating member (8) is a rotary ring including one or several seals (14, 15) on its internal surface and/or on its external surface, preferably O-rings (14, 15) positioned in grooves (16, 17).

9. The torch according to one of the preceding claims, **characterized in that** the bent tubular portion (5) includes, arranged in its second internal passage (26), a first internal duct (12) coming to connect to a second internal duct (10) of the torch body (1), said first and second ducts (10, 12) serving to convey at least one fusible welding wire (11), preferably a welding wire and protective gas.

10. The torch according to one of the preceding claims, **characterized in that** the first internal duct (12) passes substantially axially through the bent tubular portion (5) and is also bent.

11. The torch according to one of the preceding claims, **characterized in that** the first internal duct (12) including an upstream end (12a) and a downstream end (12b) projecting beyond the upstream and downstream ends (5a, 5b) of the bent tubular portion (5).

12. A welding installation including a welding current generator, MIG/MAG, a wire feeder carrying a wire reel, a gas source, and an arc-welding torch according to one of the preceding claims.

13. A manual electric arc-welding method, in particular of MIG/MAG welding, implementing a torch according to one of Claims 1 to 11 held by hand by an operator and/or a welding installation according to Claim 12.
